Europäisches Patentamt

European Patent Office

Office européen des brevets

(11) Publication number: **0 356 167**
**A2**

(12) # EUROPEAN PATENT APPLICATION

(21) Application number: **89308403.8**

(22) Date of filing: **18.08.89**

(51) Int. Cl.⁵: **C 08 L 59/00**
C 08 K 5/16, C 08 K 5/13
//(C08L59/00,33:06)

(30) Priority: **22.08.88 JP 207539/88**

(43) Date of publication of application:
**28.02.90 Bulletin 90/09**

(84) Designated Contracting States:
**AT BE CH DE ES FR GB GR IT LI LU NL SE**

(71) Applicant: **POLYPLASTICS CO. LTD.**
**3-13, Azuchicho, 2-chome**
**Chuo-Ku Osaka-shi Osaka (JP)**

(72) Inventor: **Okuda, Sadatsugu**
**885-11, Miyajima**
**Fuji-shi Shizuoka (JP)**

(74) Representative: **Jackson, Peter et al**
**HYDE, HEIDE & O'DONNELL 146 Buckingham Palace**
**Road**
**London SW1W 9TR (GB)**

(54) **Weather-resistant polyacetal resin composition.**

(57) A polyacetal resin composition is weather-resistant and comprises:

(A) a polyacetal resin,

(B) 0.01 to 5 wt. %, based on the total composition, of a weather (light) stabilizer and

(C) 1 to 40 wt. %, based on the total composition, of an acrylate resin.

EP 0 356 167 A2

Bundesdruckerei Berlin

## Description

## WEATHER-RESISTANT POLYACETAL RESIN COMPOSITION

The present invention relates to a polyacetal resin composition having an excellent weather resistance. In particular, the present invention provides a polyacetal resin composition having a quite excellent weather resistance produced by adding a weather (light) stabilizer and an acrylate resin to a polyacetal resin, and moldings comprising the polyacetal resin composition.

[Prior Art ]

As is well known, polyacetal resins are recently used in various fields as engineering plastics having excellent physical properties such as mechanical and electrical properties as well as excellent chemical properties such as chemical resistance and heat resistance. However, as the fields in which the polyacetal resins are used are widened, further unique properties are required of the materials

A further improvement is required in some cases in or relating to a weather resistance among the unique properties. In particular, polyacetal resins used for exterior parts of automobiles and components of electric and office appliances are apt to suffer from such problems as discoloration, loss of surface smoothness resulting in disappearance of the gloss thereof and crack formation on the surface of the parts. These problems cause impaired appearance and deterioration of the mechanical properties of the parts under the influence of ambient conditions of their use, such as solar rays, rain, fluorescent lamps and the air.

It has been proposed to improve the weather (light) resistance of the polyacetal resin by incorporating various weather (light) stabilizers therein in order to overcome these defects. However, although some effects can be obtained by the processes proposed heretofore, the surface conditions (cracks, gloss, etc.) and the mechanical properties of the moldings after being exposed to solar rays (ultraviolet rays), rain, etc. outdoors are not always satisfactory. Under these circumstances, a further improvement in the weather (light) resistance of them is often demanded.

A mere increase in the amount of the weather (light) stabilizer in order to satisfy such a requirement contributes to the improvement of the weather (light) resistance only to a limited extent. In addition, the increase in the amount of the stabilizer impairs the mechanical properties (such as tensile strength and bending strength). Further the stabilizer adheres to a mold to form a mold deposit in the molding step to reduce the dimensional accuracy or to impair the appearance of the moldings, which results in an increase in the time of cleaning of the mold to reduce the efficiency of the molding operation. Another problem is bleeding of the stabilizer on the surfaces of the moldings to cause troubles such as a poor appearance. Thus the conventional processes still have defects and problems.

[ Summary of the Invention ]

After intensive investigations made for the purpose of overcoming the above-described defects and solving the above-described problems to further improve the weather (light) stability of the polyacetal resin used outdoors, the inventors have completed the present invention.

Thus the present invention relates to a weather-resistant polyacetal resin composition comprising:

(A) a polyacetal resin,

(B) 0.01 to 5 wt. %, based on the total composition, of a weather light stabilizer and

(C) 1 to 40 wt. %, based on the total composition, of an acrylate resin.

The polyacetal resin (A) used in the present invention is a polymeric compound comprising oxymethylene groups (-CH$_2$O-) as the main constituent units. It may be any of polyoxymethylene homopolymers and copolymers, terpolymers and block copolymers containing a small amount of other constituent units in addition to the oxymethylene groups. The molecule of the polyacetal resin (A) may have not only a linear structure but also a branched or crosslinked structure. The degree of polymerization of the polyacetal resin (A) is not particularly limited.

Among the weather (light) stabilizers (B) usable in the present invention, preferred is(are) one or more compounds selected from the group consisting of (1) benzotriazoles, (2) benzophenones, (3) aromatic benzoates, (4) cyanoacrylates, (5) oxalanilides and (6) hindered amines.

Examples of them are as follows:

(1) benzotriazoles: 2-(2'-hydroxy-5'-methylphenyl benzotriazole, 2-(2'-hydroxy-3',5'-di-t-butylphenyl) benzotriazole, 2-(3,5-di-t-amyl-2-hydroxyphenyl) benzotriazole, 2-(2'-hydroxy-3',5'-diisoamylphenyl) benzotriazole, 2-[2-hydroxy-3,5-bis(α,α-dimethylbenzyl) phenyl]benzotriazole and 2-(2'-hydroxy-4'-octoxyphenyl) benzotriazole,

(2) benzophenones: 2,4-dihydroxybenzophenone, 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxybenzophenone, 2-hydroxy-4-methoxy-5-sulfobenzophenone and 2-hydroxy-4-oxybenzylbenzophenone,

(3) aromatic benzoates: p-t-butylphenyl salicylate and p-octylphenyl salicylate,

(4) cyanoacrylates: 2-ethylhexyl 2-cyano-3,3'-diphenylacrylate and ethyl 2-cyano-3,3'-diphenylacrylate, and

5) oxalanilides: N-(2-ethylphenyl)-N'-(2-ethoxy-5-t-butylphenyl)oxalamide and N-(2-ethylphenyl)-N'-(2-ethoxyphenyl)oxalamide.

The hindered amines (6) usable herein are piperidine derivatives having a sterically hindered group, such as 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-methoxy-2,2,6,6-tetramethylpiperidine, 4-benzoyloxy-2,2,6,6-tetramethylpiperidine, 4-cyclohexyloxy-2,2,6,6-tetramethylpiperidine, 4-phenoxy-2,2,6,6-tetramethylpiperidine, 4-benzyloxy-2,2,6,6-tetramethylpiperidine, 4-(phenylcarbamoyloxy)-2,2,6,6-tetramethylpiperidine, bis(2,2,6,6-tetramethyl-4-piperidyl) oxalate, bis(2,2,6,6-tetramethyl-4-piperidyl) malonate, bis(2,2,6,6-tetramethyl-4-piperidyl) adipate, bis(2,2,6,6-tetramethyl-4-piperidyl) sebacate, bis(1,2,2,6,6-pentamethylpiperidyl) sebacate, bis(2,2,6,6-tetramethyl-4-piperidyl) terephthalate, 1,2-bis(2,2,6,6-tetramethyl-4-piperidyloxy)ethane, bis(2,2,6,6-tetramethyl-4-piperidyl) hexamethylene-1,6-dicarbamate, bis (1-methyl-2,2,6,6-tetramethyl-4-piperidyl) adipate and tris(2,2,6,6-tetramethyl-4-piperidyl) benzene-1,3,5-tricarboxylate.

High-molecular piperidine derivative polycondensates such as dimenthyl succinate / 1-(2-hydroxyethyl)-4-hydroxy-2,2,6,6-tetramethylpiperidine polycondensate are also usable.

These weather (light) stabilizers are used solely or preferably in combination of two or more of them. Particularly, a combination of one or more of the weather stabilizers (1) to (5) with the hindered amine (6) is preferred.

The weather (light) stabilizer (B) is used in an amount of 0.01 to 5 wt. %, particularly 0.02 to 3 wt. %, based on the total composition. When the amount of the stabilizer is insufficient, its effect cannot be expected and, on the contrary, an excess thereof is economically disadvantageous and causes the above-described problems and defects (such as impairment of the mechanical properties and staining of the mold).

The present invention is characterized in that the weather (light) stabilizer (B) and the acrylate resin (C) are incorporated in the polyacetal resin (A).

The acrylate resins usable in the present invention include homopolymers of acrylic acid, its esters (such as methyl acrylate, ethyl acrylate, n-propyl acrylate, isopropyl acrylate, n-butyl acrylate, n-hexyl acrylate and n-octyl acrylate), methacrylic acid and its esters (such as methyl methacrylate, ethyl methacrylate, n-propyl methacrylate, isopropyl methacrylate, n-butyl methacrylate, isobutyl methacrylate, n-amyl methacrylate and n-octyl methacrylate); and copolymers of them with, for example, styrene, acrylonitrile, butadiene or isoprene. Among them, methyl methacrylate homopolymer and copolymers comprising methyl methacrylate as the main component and an acrylic ester, methacrylic ester (other than methyl methacrylate), acrylic acid, methacrylic acid, styrene or acrylonitrile are preferably used.

The amount of the acrylate resin (C) used herein is 1 to 40 wt. %, particularly 3 to 20 wt. %, based on the total composition. When the amount of the acrylate resin (C) is insufficient, no sufficient effects of resisting to weather (light) and particularly preventing the crack formation on the molding surface can be exhibited. On the contrary, when the amount thereof is excessive, a bad influence is exerted on the mechanical properties and the thermal stability.

When the acrylate resin (C) is used in combination with the weather (light) stabilizer, the weather (light) stability thereof is synergistically increased.

It is desirable to add other known stabilizers to the composition of the present invention to further increase the thermal stability, etc. For this purpose, known antioxidants, nitrogen compounds, and alkali and alkaline earth metal compounds are preferably used either alone or in combination of two or more of them.

The composition of the present invention can be colored with a desired color by suitably adding carbon black, dye or pigment.

The combination of the weather (light) stabilizer with the acrylate resin according to the present invention is not only effective in imparting the weather resistance to the resin material per se but also quite effective in preventing the decoloration or discoloration of the dyes and pigments added to the resin. Thus it is quite effective in keeping the appearance and quality of the colored products.

The combination of the weather (light) stabilizer with carbon black is effective in further improving the weather (light) stability.

The composition of the present invention may further contain known additives in order to have desired properties. The additives include, for example, lubricants, nucleating agents, releasing agents, antistatics, surfactants, organic polymeric materials, and inorganic or organic, fibrous, granular or platy fillers. These additives can be used either singly or in combination of two or more of them.

The composition of the present invention can be produced by a known process with a known apparatus ordinarily used for the production of synthetic resin compositions. In this process, the necessary components are mixed together, the mixture is kneaded and extruded with a single-screw or twin-screw extruder to form pellets and the pellets are molded to form the moldings. The preparation of the composition can be conducted simultaneously with the molding with a molding machine. In another process, a part or the whole of the resin components are pulverized in order to facilitate the dispersion or mixing of the components and then the components are mixed and melt-extruded to form pellets.

The stabilizer and the additives may be added in any step of the process. As a matter of course, they can be added immediately before the production of the moldings, i.e. the final product.

The resin composition of the present invention can be molded by any of extrusion, injection, compression, vacuum, blow and foam molding processes.

The composition of the present invention comprising a polyacetal resin containing a weather (light) stabilizer and a specified acrylate resin incorporated therein has remarkable effects that the surface conditions thereof

3

are far more excellent and particularly the crack formation time is far longer and that the reduction in the tensile strength is less when it is exposed to ultraviolet rays or water for a long period of time than those of ordinary acrylic resin-free compositions.

Therefore, the weather-resistant polyacetal resin composition of the present invention is suitably used as a material for molded parts in all the fields in which an excellent weather (light) resistance is required. In particular, it is usable as a starting material for substances which are to be exposed to solar rays, rain and air for a long period of time, such as exterior parts of automobiles (for example, outer handles, fuel lids, wheel covers, front fenders and spoilers), electric appliances, cameras, other industrial parts, construction materials, pipes, sundries and household goods.

[Examples]

The following Examples will further illustrate the present invention, which by no means limit the present invention.

In the following Examples, the characteristic values such as weather resistance were determined by the following methods:

1) Crack formation time:

The test pieces were irradiated with ultraviolet rays with a weather meter (WBL-SUN-HCH; a product of Suga Shikenki Co., Ltd.) having a rain spray at 63°C. The surfaces of the test pieces were observed with a magnifying lens at x10 magnification to confirm the crack formation. The crack formation time was the time at which the crack formation began. The higher the value, the better the weather resistance.

2) Changes in the surface conditions:

The test pieces were irradiated with ultraviolet rays with the same weather meter as that described above for a predetermined period of time. Changes in the hue and gloss of the test pieces after the irradiation were observed. The extent of the changes was classified into five groups. The smaller the figure, the smaller the change (i.e. the smaller the gloss impairment and discoloration).

3) Tensile strength:

The tensile strengths of the test pieces were determined by an ordinary method (ASTM-D 638) before the irradiation with the light of the weather meter and after the irradiation for a predetermined period of time.

Examples 1 to 12 and Comparative Examples 1 to 11 A weather (light) stabilizer (B) and an acrylate resin (methyl methacrylate resin) (C) were added to a polyacetal resin (A) (trade name: Duracon M 90; a product of Polyplastics Co., Ltd.) as shown in Table 1 to obtain a mixture. The mixture was melt-kneaded with a 30 mm double-screw extruder to form a composition in pellet form. Then the pellets were molded into test pieces with an injection molding machine. The weather resistance and other characteristics of them were determined. For comparison, the same procedure as above was repeated except that either the weather (light) stabilizer (B) or the acrylate resin (C) was used alone.

Table 1

| No. | | (A) Polyacetal resin (wt. %) | (B) Weather (light stabilizer) Note 1 (wt. %) | Note 2 (wt. %) | (C) Acrylic resin Note 3 (wt. %) | Carbon black (wt. %) | Crack forma-tion time (h) | Surface condition after irradiation for: 300 h | 600 h | 1000 h | Tensile strength (kg/cm²) Before irradia-tion | after irradiation for: 600 h | 1000 h | 2000 h |
|---|---|---|---|---|---|---|---|---|---|---|---|---|---|---|
| Example | 1 | 89.5 | B-1 (0.5) | — | C-1 (10) | — | 380 | 1 | 2 | 5 | 645 | 635 | 580 | 480 |
| | 2 | 89.5 | B-1 (0.5) | — | C-2 (10) | — | 400 | 1 | 2 | 5 | 640 | 630 | 570 | 475 |
| | 3 | 89.5 | B-1 (0.5) | — | C-3 (10) | — | 400 | 1 | 2 | 5 | 643 | 640 | 574 | 471 |
| | 4 | 89.5 | B-2 (0.5) | — | C-2 (10) | — | 380 | 1 | 2 | 5 | 638 | 635 | 573 | 450 |
| | 5 | 89.5 | B-3 (0.5) | — | C-2 (10) | — | 420 | 1 | 2 | 5 | 640 | 636 | 560 | 455 |
| | 6 | 89.5 | — | B-4 (0.5) | C-2 (10) | — | 380 | 1 | 2 | 5 | 643 | 640 | 570 | 465 |
| | 7 | 89.5 | — | B-5 (0.5) | C-2 (10) | — | 380 | 1 | 2 | 5 | 640 | 638 | 568 | 470 |
| | 8 | 94.5 | B-1 (0.5) | — | C-2 (5) | — | 350 | 1 | 2 | 5 | 635 | 625 | 570 | 445 |
| | 9 | 79.5 | B-1 (0.5) | — | C-2 (20) | — | 440 | 1 | 2 | 4 | 650 | 655 | 600 | 460 |
| | 10 | 89.5 | B-3 (0.25) | B-5 (0.25) | C-2 (10) | — | 580 | 1 | 2 | 4 | 642 | 640 | 601 | 510 |
| | 11 | 89.5 | B-1 (0.25) | B-4 (0.25) | C-2 (10) | — | 600 | 1 | 2 | 3 | 644 | 641 | 605 | 505 |
| | 12 | 89.0 | B-1 (0.25) | B-4 (0.25) | C-2 (10) | (0.5) | 1150 | 1 | 1 | 2 | 648 | 650 | 640 | 613 |

EP 0 356 167 A2

Table 1 (continued)

| No. | | (A) Polyacetal resin (wt. %) | (B) Weather (light stabilizer) | | (C) Acrylic resin | Carbon black | Crack forma-tion time | Surface condition after irradiation for: | | | Tensile strength (kg/cm$^2$) | | | |
| --- | --- | --- | --- | --- | --- | --- | --- | --- | --- | --- | --- | --- | --- | --- |
| | | | Note 1 (wt. %) | Note 2 (wt. %) | Note 3 (wt. %) | (wt. %) | (h) | 300 h | 600 h | 1000 h | Before irradia-tion | after irradiation for: | | |
| | | | | | | | | | | | | 600 h | 1000 h | 2000 h |
| Comparative Example | 1 | 99.5 | B-1 (0.5) | — | — | — | 280 | 2 | 3 | 5 | 625 | 610 | 520 | 350 |
| | 2 | 99.5 | B-2 (0.5) | — | — | — | 260 | 3 | 4 | 5 | 628 | 600 | 510 | 360 |
| | 3 | 99.5 | B-3 (0.5) | — | — | — | 300 | 2 | 3 | 5 | 628 | 595 | 508 | 340 |
| | 4 | 99.5 | — | B-4 (0.5) | — | — | 240 | 3 | 4 | 5 | 630 | 605 | 522 | 338 |
| | 5 | 99.5 | — | B-5 (0.5) | — | — | 280 | 2 | 3 | 5 | 626 | 590 | 513 | 340 |
| | 6 | 99.5 | B-3 (0.25) | B-5 (0.25) | — | — | 380 | 1 | 2 | 5 | 630 | 620 | 550 | 420 |
| | 7 | 99.5 | B-1 (0.25) | B-4 (0.25) | — | — | 400 | 1 | 2 | 5 | 627 | 619 | 540 | 410 |
| | 8 | 99.0 | B-1 (0.25) | B-4 (0.25) | — | (0.5) | 880 | 1 | 2 | 4 | 633 | 635 | 610 | 560 |
| | 9 | 90.0 | — | — | C-1 (10) | — | 100 | 4 | 5 | 5 | 650 | 600 | 483 | immeasurable |
| | 10 | 90.0 | — | — | C-2 (10) | — | 140 | 4 | 5 | 5 | 648 | 603 | 500 | |
| | 11 | 90.0 | — | — | C-3 (10) | — | 160 | 4 | 4 | 5 | 645 | 598 | 470 | |

Note 1 B-1: 2-(3,5-di-t-amyl-2-hydroxyphenyl)benzotriazole

B-2: 2-[2-hydroxy-3,5-bis(α,α-dimethylbenzyl)phenyl]benzotriazole

B-3: 2-hydroxy-4-oxybenzylbenzophenone

Note 2 B-4: bis(2,2,6,6-tetramethyl-4-piperidyl) sebacate

B-5: dimethyl succinate / 1-(2-hydroxyethyl)-4-hydroxy-2,2,6,6-tetramethylpiperidine polycondensate

Note 3 C-1: methyl methacrylate resin (average molecular weight: 200,000)

C-2: methyl methacrylate resin (average molecular weight: 50,000)

C-3: methyl methacrylate resin (average molecular weight: 7,000)

EP 0 356 167 A2

**Claims**

1. A weather-resistant polyacetal resin composition comprising:
   (A) a polyacetal resin,
   (B) 0.01 to 5 wt. %, based on the total composition, of a weather (light) stabilizer and
   (C) 1 to 40 wt. %, based on the total composition, of an acrylate resin.

2. A weather-resistant polyacetal resin composition according to Claim 1, wherein the weather (light) stabilizer (B) is one or more compounds selected from the group consisting of benzotriazoles, benzophenones, aromatic benzoates, cyanoacrylates, oxalanilides and hindered amines.

3. A weather-resistant polyacetal resin composition according to Claim 1 or 2, wherein the weather (light) stabilizer (B) comprises one or more of benzotriazoles, benzophenones, aromatic benzoates, cyanoacrylates and oxalanilides, and further a hindered amine.

4. A weather-resistant polyacetal resin composition according to any preceding claim, wherein the weather (light) stabiliser (B) is used in an amount of 0.02 to 3 wt %, based on the total composition.

5. A weather-resistant polyacetal resin composition according to any preceding claim, wherein the acrylate resin (C) is a methyl methacrylate homopolymer or a copolymer mainly comprising methyl methacrylate.

6. A weather-resistant polyacetal resin composition according to Claim 5, wherein the copolymer mainly comprising methyl methacrylate further comprises one or more of an acrylic ester, methacrylic ester (other than methyl methacrylate), acrylic acid, methacrylic acid, styrene or acrylonitrile.

7. A weather-resistant polyacetal resin composition according to any preceding claim, wherein the amount of the acrylate resin (c) is 3 to 20 wt %, based on the total composition.

8. A weather-resistant polyacetal resin composition according to any preceding claim, which further comprises one or more known anti-oxidants, nitrogen compounds and alkali and alkaline earth metal compounds